(19) Europäisches Patentamt
European Patent Office
Office européen des brevets

(11) Veröffentlichungsnummer : **0 359 119 B1**

(12) **EUROPÄISCHE PATENTSCHRIFT**

(45) Veröffentlichungstag der Patentschrift :
**13.05.92 Patentblatt 92/20**

(51) Int. Cl.$^5$ : **C08F 283/08,** C08L 51/08, C08L 51/04

(21) Anmeldenummer : **89116514.4**

(22) Anmeldetag : **07.09.89**

(54) **Thermoplastische Formmassen auf Basis von modifiziertem Polyphenylenether.**

(30) Priorität : **16.09.88 DE 3831482**

(43) Veröffentlichungstag der Anmeldung :
**21.03.90 Patentblatt 90/12**

(45) Bekanntmachung des Hinweises auf die Patenterteilung :
**13.05.92 Patentblatt 92/20**

(84) Benannte Vertragsstaaten :
**BE DE FR GB IT NL**

(56) Entgegenhaltungen :
**EP-A- 0 176 775**
**EP-A- 0 271 699**
**EP-A- 0 285 964**
**EP-A- 0 285 966**
**DE-A- 3 346 304**

(73) Patentinhaber : **BASF Aktiengesellschaft**
**Carl-Bosch-Strasse 38**
**W-6700 Ludwigshafen (DE)**

(72) Erfinder : **Ostermayer, Bertram, Dr.**
**Pfaffenpfad 14**
**W-6701 Roedersheim-Gronau (DE)**
Erfinder : **Taubitz, Christof, Dr.**
**In der Dreispitz 15**
**W-6706 Wachenheim (DE)**
Erfinder : **Schwaben, Hans-Dieter, Dr.**
**Lindenstrasse 6 a**
**W-6721 Freisbach (DE)**
Erfinder : **Klaerner, Peter, Dr.**
**Haupstrasse 62**
**W-6719 Battenberg (DE)**
Erfinder : **Brandt, Hermann, Dr.**
**Keltenstrasse 30**
**W-6707 Schifferstadt (DE)**

**EP 0 359 119 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen, enthaltend als wesentliche Komponenten

A) 10 bis 90 Gew.%, bezogen auf die Summe aus A und B, eines modifizierten Polyphenylenethers hergestellt dürch Umsetzing in der Schmelze von

$a_1$) 70 bis 99,95 Gew.%, bezogen auf A, eines Polymeranteils, der mindestens 30 Gew.%, bezogen auf $a_1$ Polyphenylenether und hochstens 70 Gew.%, bezogen auf $a_1$ eines vinylaromatischen Polymeren enthält,

$a_2$) 0,05 bis 10 Gew.%, bezogen auf A,

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung oder

$a_{23}$) einer $\alpha,\beta$-ungesättigten Dicarbonsäure, deren Monoester, Diester, Amid oder Diamid, Imid oder Anhydrid und

$a_3$) 0 bis 20 Gew.%, bezogen auf A, eines weiteren aliphatischen Comonomeren, das unter den Herstellbedingungen mit $a_1$ reagieren kann,

und

B) 10 bis 90 Gew.%, bezogen auf die Summe aus A und B, eines kautschukmodifizierten statistischen Copolymerisates aus

$b_1$) 85 bis 99,9 Gew.%, bezogen auf B, eines vinylaromatischen Monomeren und

$b_2$) 0,1 bis 15 Gew.%, bezogen auf B, einer $\alpha,\beta$-ungesättigten Carbonsäure.

Thermoplastische Massen, die sich zur Herstellung von Formteilen eignen und die kautschukmodifizierte Styrolpolymerisate und Polyphenylenether enthalten, sind an sich bekannt. So sind aus DE-A 33 46 304 Formmassen aus unmodifiziertem Polyphenylenether und Styrol/Acrylsäure-Copolymerisaten bekannt.

Weiterhin wurde in WO-A 86/02086, WO-A 87/00540 und EP-A 226 055 offenbart, daß Polyphenylenether zum Teil gemeinsam mit Styrolpolymerisaten in der Schmelze zur besseren Anbindung an Polyamid modifiziert werden.

Gemäß EP-B 121 974 werden Polyphenylenether und kautschukmodifiziertes Polystyrol mit Dienen oder Dienophilen wie Maleinsäureanhydrid oder Maleinimid in der Schmelze umgesetzt.

Bei diesen bekannten Formmassen ist jedoch die Spannungsrißbeständigkeit nicht ausreichend.

Aus EP-A 281 916 waren Polyamid/Polyphenylenether-Blends bekannt, die ein unmodifiziertes Copolymerisat aus Styrol und Maleinsäurederivaten enthalten. Über die Spannungsrißbeständigkeit dieser polyamidhaltigen Formmassen wurde nichts ausgesagt.

In EP-A 285 969, EP-A 285 975 und EP-A 289 780 werden Formmassen aus modifizierten Polyphenylenethern und nitrilgruppenhaltigen Styrolpolymerisaten beschrieben.

Aufgabe der vorliegenden Erfindung war es, thermoplastische Formmassen auf Basis von modifiziertem Polyphenylenether bereitzustellen, die einfach herzustellen sind und neben einer guten Verarbeitbarkeit gute thermische, mechanische und dielektrische Eigenschaften aufweisen. Insbesondere sollen sich die Formmassen durch eine hohe Spannungsrißbeständigkeit auszeichnen.

Demgemäß wurden die eingangs definierten Formmassen gefunden.

Bevorzugte Formmassen sowie ein Verfahren zu ihrer Herstellung sind den Unteransprüchen zu entnehmen.

Als Komponente A enthalten die erfindungsgemäßen Formmassen 10 bis 90, vorzugsweise 20 bis 80, insbesondere 30 bis 70 Gew.%, bezogen auf die Summe aus A und B, mindestens eines modifizierten Polyphenylenethers eingemischt, der unter Verwendung der Komponenten $a_1$, $a_2$ und gegebenenfalls $a_3$ hergestellt wird. Unter "modifiziert" soll dabei eine durch die Umsetzung der Komponenten $a_1$ mit $a_2$ bzw. $a_3$ hervorgerufene Veränderung von $a_1$ verstanden werden,

Bei der Komponente $a_1$ handelt es sich um einen Polymeranteil, der mindestens 30, bevorzugt mehr als 60, insbesondere 85 bis 97 Gew.%, bezogen auf $a_1$, Polyphenylenether und höchstens 70, bevorzugt weniger als 40, insbesondere 3 bis 15 Gew.%, bezogen auf $a_1$, eines vinylaromatischen Polymeren enthält.

Die in Frage kommenden Polyphenylenether sind an sich bekannt, sie werden nach üblichen Verfahren aus in ortho-Position durch Alkylgruppen, Alkoxygruppen, Chlor oder Brom disubstituierten Phenolen durch oxidative Kupplung hergestellt (vgl. US-Patent 3 661 848, 3 378 505, 3 306 874, 3 306 875 und 3 639 656). Die Alkyl- oder Alkoxygruppen, die bevorzugt 1 bis 4 C-Atome, aber kein $\alpha$-ständiges tertiäres Wasserstoffatom enthalten, können auch ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, Poly-2 6-dichlor-1 4-phenylenether und Poly-2,6-dibrom-1,4-phenylenether, oder Copolymere, wie solche, die 2,3,6-Trimethylphenol enthalten, außerdem Polymermischungen. Bevorzugt ist Poly-2,6-dimethyl-1,4-phenylenether. Die in einem solchen Verfahren hergestellten Polyphenylenether weisen im allgemeinen eine relative Viskosität von 0,3 bis 0,8 dl/g, gemessen in 1-gew.%iger Lösung in Chloroform bei 30°C auf.

Das vinylaromatische Polymer ist vorzugsweise mit dem eingesetzten Polyphenylenether verträglich, dh. ganz oder weitgehend in diesen Polymeren löslich (vgl. A. Noshay, Block Copolymers, S. 8 bis 10, Academic Press, 1977 und 0. Olabisi, Polymer-Polymer Miscibility, 1979, S. 117 bis 189).

Die vinylaromatischen Polymeren weisen im allgemeinen einen Schmelzindex (MFI, 200°C/5 kg, gemessen nach DIN 53 735) von 1 bis 30, insbesondere von 15 bis 25 g/10 min auf.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, α-Methylstyrol oder p-Methylstyrol genannt; in untergeordneten Anteilen (vorzugsweise nicht mehr als 20, insbesondere nicht mehr als 8 Gew.%, bezogen auf die Polymeren) können auch Comonomere wie (Meth)acrylnitril oder (Meth)acrylsäureester am Aufbau beteiligt sein. Ein besonders bevorzugtes vinylaromatisches Polymeres ist Polystyrol. Es versteht sich, daß auch Mischungen dieser Polymeren eingesetzt werden können.

Verfahren zur Herstellung solcher vinylaromatischer Polymerer sind an sich bekannt und in der Literatur beschrieben, so daß sich hier nähere Angaben erübrigen. Nur beispielsweise seien hier als geeignete Polymerisationsverfahren die Masse-, Suspensions-, Emulsions- oder Lösungspolymerisation erwähnt.

Der Anteil der Komponente $a_1$ an der Komponente A liegt im Bereich von 70 bis 99,95, vorzugsweise 82 bis 99,9 und insbesondere 95 bis 99,8 Gew.%, bezogen auf A.

Als wesentliche Komponente $a_2$ enthält er modifizierte Polyphenylenether A eine der Verbindungen $a_{21}$ bis $a_{23}$. Bevorzugt wird die Komponente $a_{23}$ eingesetzt.

Der Anteil der Komponente $a_2$ beträgt 0,05 bis 10, vorzugsweise 0,1 bis 8, insbesondere 0,2 bis 5 Gew.%, bezogen auf die Komponente A.

Als Komponente $a_2$ ist ein mindestens eine Amidgruppe enthaltendes Monomeres mit einer polymerisierbaren Doppelbindung ($a_{21}$) geeignet, vorzugsweise ein solches der allgemeinen Formeln I oder II

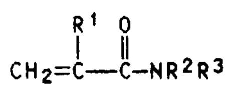

I

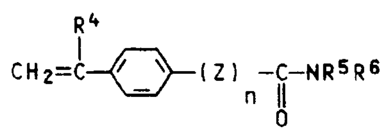

II ,

wobei $R^1$, $R^2$, $R^3$, $R^4$, $R^5$ und $R^6$ Wasserstoff, Alkyl-, Cycloalkyl- oder Arylgruppen mit bis zu 12 C-Atomen und 2 Alkylengruppen mit 1 bis 12 C-Atomen und $R^1$ und $R^4$ zusätzlich Alkoxygruppen mit bis zu 12 C-Atomen darstellen und n den Wert 0 oder 1 vorzugsweise 0 hat.

Bevorzugte Substituenten $R^1$, $R^2$, $R^3$, $R^4$, $R^5$ und $R^6$ sind Wasserstoff, Alkylgruppen mit 1 bis 10 C-Atomen, Cycloalkylgruppen mit bis zu 8 C-Atomen oder Arylgruppen, z.B. Phenyl. $R^1$ und $R^4$ sind insbesondere H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt. Bevorzugt werden Acrylamid, Methacrylamid, N-Phenylacrylamid und N-Phenylmethacrylamid verwendet.

Als Komponente $a_2$ kann auch ein eine Lactam-Gruppe enthaltendes Monomer mit einer polymerisierbaren Doppelbindung ($a_{22}$) eingesetzt werden. Vorzugsweise werden Lactame der allgemeinen Struktur III

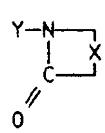

III

eingesetzt, wobei X eine lineare oder verzweigte Alkylengruppe mit 2 bis 15 C-Atomen darstellt und Y die allgemeine Formel

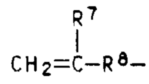

hat, wobei $R^7$ ein Wasserstoffatom, eine Alkyl- oder Alkoxygruppe mit 1 bis 4 C-Atomen und $R^8$ einen zweibindigen Substituenten

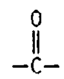 ,

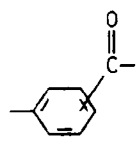 oder

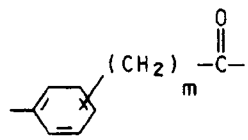 ,

wobei m eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen, insbesondere der Acryloyl- oder Methacryloylrest.

Bevorzugt sind Lactameinheiten, die zu Polyamiden polymerisierbar oder copolymerisierbar sind, wie dies im Houben-Weyl, Methoden der organ. Chemie, Band XI/2, S. 511 bis 587, (1958) und Band XIV/2, S. 111 bis 131, (1963) beschrieben wird. Beispielsweise seien ß-Propiolactame wie 3,3′-Dimethyl-3-propiolactam, genannt. Ebenfalls bevorzugte Lactam-Einheiten sind Pyrrolidon und ε-Caprolactam, außerdem 7-Önantholactam, ß-Capryllactam und 12-Laurinlactam, wie sie bei K. Dachs, Angewandte Chemie, 74, 540 bis 545, (1962) beschrieben werden. Es können auch Mischungen dieser Verbindungen eingesetzt werden.

Als besonders bevorzugtes Beispiel einer Komponente $a_{22}$ sei hier nur N-(Meth)acryloyl-ε-caprolactam

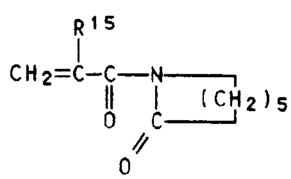

genannt, wobei $R^{15}$ ein Wasserstoffatom oder eine Methylgruppe sein kann.

Bei der Komponente $a_{23}$ handelt es sich um eine α,β-ungesättigte Dicarbonsäure, deren Monoester, Diester, Amid, Diamid, Imid oder Anhydrid, bevorzugt eine Verbindung der allgemeinen Formel IV

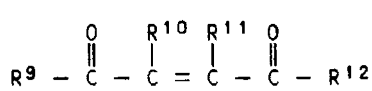 IV,

wobei

$R^9$ und $R^{12}$ gemeinsam -O-, Hydroxylgruppen, Aroxy-, Alkoxy-, Aralkoxy- oder Cycloalkoxygruppen mit bis zu 12 C-Atomen, $-NR^{13}R^{14}$ oder gemeinsam $-NR^{13}-$,

$R^{10}$ und $R^{11}$ Wasserstoff oder, wenn $R^{11}$ oder $R^{10}$ Wasserstoff ist, eine Alkyl-, Alkoxy- oder Cycloalkylgruppe mit bis zu 12 C-Atomen, eine Arylgruppe oder gemeinsam eine Alkylengruppe mit 4 C-Atomen,

$R^{13}$ und $R^{14}$ Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können, darstellen.

Die Substituenten müssen, was sich allerdings von selbst versteht, so beschaffen sein, daß sie die Modifizierungsreaktion nicht verhindern.

Die Ester, Amide, Diamide, Imide und insbesondere die Dicarbonsäuren werden bevorzugt.

Als Beispiele für Dicarbonsäuren seien Maleinsäure, Fumarsäure, Methylmaleinsäure, Butenylbernsteinsäure und Tetrahydrophthalsäure genannt, von denen Maleinsäure und Fumarsäure besonders bevorzugt werden.

Bevorzugte Imide leiten sich von der Maleinsäure ab. Die Substituenten $R^{10}$, $R^{11}$ und $R^{13}$ sind dabei Wasserstoff, Alkylgruppen mit 1 bis 4 C-Atomen, beispielsweise Methyl-, Ethyl- oder n-, i- oder t-Butyl, Cycloakylgruppen mit bis zu 8 C-Atomen oder Phenylgruppen, die im Falle von $R^{13}$ durch $C_1$-$C_4$-Alkylgruppen substituiert sein können. Nur beispielhaft seien als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-Benzylmaleinimid, N-(1-Naphthyl)maleinimid oder deren Mischungen genannt. Von diesen wird N-Phenylmaleinimid besonders bevorzugt.

Bevorzugte Halbester und Halbamide leiten sich von der Maleinsäure ab.

Die Halbester leiten sich bevorzugt von primären und sekundären Monoalkoholen, wie Methanol, Ethanol, n- und i-Propanol, n- und i-Butanol, Pentanol, Hexanol, Heptanol, Octanol, z.B. 2-Ethylhexylalkohol und von höheren Alkoholen wie Dodecanol und cycloaliphatischen Alkoholen, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen. Als Amine zur Herstellung der erfindungsgemäß eingesetzten Halbamide seien ganz allgemein sekundäre Amine und N-Alkylaniline genannt. Beispiele hierfür sind N-Methyl- oder N-Ethylalkylamine oder N-Methylanilin. Ganz allgemein werden Halbester den Halbamiden vorgezogen.

Daneben können auch Anhydride wie Maleinsäureanhydrid verwendet werden.

Als $a_3$ kommen weitere aliphatische Comonomere in Frage, die unter den Herstellungsbedingungen mit der Komponente $a_1$ reagieren bzw. auf $a_1$ aufpfropfen können. Beispielsweise seien hier Acrylsäure, Methacrylsäure, Acrylate und Methacrylate genannt. Der Anteil der Komponente $a_3$ beträgt 0 bis 20, vorzugsweise 0 bis 10 Gew.%, bezogen auf die Komponente A. Besonders bevorzugt werden jedoch Formmassen, bei deren Herstellung keine dieser weiteren Comonomeren verwendet wurden.

Bei der Herstellung der modifizierten Polyphenylenether A können bis zu 20 Gew.%, bezogen auf A, an Radikalstartern eingesetzt werden.

Der Anteil der Radikalstarter ist in der Regel geringer als die Summe der verwendeten monomeren Verbindungen $a_2$. Im allgemeinen handelt es sich dabei um ein organisches Peroxid oder eine Azo-Verbindung. Verwendet werden können organische Peroxide mit einer Halbwertzeit im Bereich von 0,1 bis 3000 s bei 200°C. Die Wahl des Radikalstarters richtet sich nach der gewünschten Reaktionstemperatur. Beispielsweise seien als Radikalstarter tert.-Butylperoxid und Dicumylperoxid genannt.

Häufig, insbesondere bei Temperaturen über 265°C, hat es sich als vorteilhaft erwiesen, ohne Zugabe von Radikalstartern, d.h. in Abwesenheit oder praktischer Abwesenheit von Radikalstartern zu arbeiten. Dies gilt insbesondere dann, wenn als Komponente $a_2$ Fumarsäure eingesetzt wird, da hier bei der Verwendung von Radikalstartern unter Umständen unerwünschte Nebenreaktionen auftreten können.

Zur Herstellung des modifizierten Polyphenylenethers A werden die eingesetzten Komponenten in der Schmelze bei 250 bis 350°C, vorzugsweise 265 bis 295°C, miteinander umgesetzt. Hierzu eignen sich besonders Extruder, da in diesen im allgemeinen auch eine gute Durchmischung der Komponenten erzielt wird. Die mittleren Verweilzeiten liegen zweckmäßigerweise im Bereich von 0,5 bis 30 min., vorzugsweise von 1 bis 5 min.

Besonders gut eignen sich zweischneckenextruder. Die Komponenten werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Prinzipiell ist die Herstellung des modifizierten Polyphenylenethers auch in jedem Reaktionsgefäß, welches eine Reaktion der Komponenten miteinander ermöglicht, durchführbar.

Die Komponente B wird in den erfindungsgemäßen Formmassen zu 10 bis 90, vorzugsweise 20 bis 80, insbesondere 30 bis 70 Gew.%, bezogen auf die Summe von A und B, eingesetzt.

B ist ein kautschukmodifiziertes statistisches Copolymerisat aus 85 bis 99,9, bevorzugt 90 bis 99,8, insbesondere 97 bis 99,7 Gew.% $b_1$ und 0,1 bis 15, bevorzugt 0,2 bis 10, insbesondere 0,3 bis 3 Gew.% $b_2$.

Unter einem statistischen Copolymerisat im Sinne dieser Erfindung wird ein Copolymerisat verstanden, in dessen Polymerhauptkette die Monomereinheiten $b_1$ und $b_2$ in statistischer Abfolge einpolymerisiert sind, wie

es durch die folgende Formel beispielhaft symbolisiert ist:

$$-b_2-b_1-b_1-b_2-b_1-b_2-b_2-b_2-b_1-b_1-.$$

Im Gegensatz dazu stehen z.B. Pfropf- oder Kammpolymerisate, in denen das Monomere $b_2$ an einer Hauptkette aus $b_1$ in Seitenketten aufgepfropft ist oder Blockcopolymerisate (s. z.B. H.G. Elias "Makromoleküle", Verlag Hüthig u. Wepf, 1971, S. 46/47).

Als monovinylaromatische Monomere $b_1$ kommen insbesondere das Styrol, ferner die kern- und seitenkettenalkylierten Styrole, wie α-Methylstyrol und p-Methylstyrol in Betracht. Vorzugsweise wird jedoch ausschließlich Styrol verwendet.

Als α,β-ungesättigte Carbonsäuren $b_2$ werden α,β-ungesättigte Mono- oder Dicarbonsäuren verwendet. Als Carbonsäuren kommen in Frage: Acrylsäure, Methacrylsäure, Crotonsäure und Isocrotonsäure, 3-Methyl-2-butensäure, Vinylessigsäure, Ethylacrylsäure, Itaconsäure, Fumarsäure und Maleinsäure. Vorzugsweise werden Acrylsäure, Fumarsäure, Itaconsäure und Methacrylsäure oder Mischungen dieser Säuren verwendet. Besonders bevorzugt ist Acrylsäure, Methacrylsäure und Fumarsäure.

Die Kautschukmodifizierung des Copolymerisates geschieht zweckmäßigerweise dadurch, daß es aus den angegebenen Mengen $b_1$ und $b_2$ in Gegenwart eines Kautschuks hergestellt wird. Man geht zweckmäßigerweise von einem Gemisch aus 3 bis 25 Gew.%, vorzugsweise 5 bis 13 Gew.% Kautschuk und 75 bis 97 Gew.%, vorzugsweise 87 bis 95 Gew.% der Mischung von $b_1$ und $b_2$ aus.

Geeignete Kautschuke sind beispielsweise Polybutadien, Copolymerisate aus Butadien oder Isopren und Styrol, insbesondere Blockcopolymerisate aus 10 bis 60 Gew.% Blockpolystyrolgehalt und 40 bis 90 Gew.% Blockbutadiengehalt, Butadien-Acrylester-Copolymere auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern und Copolymere aus Ethylen, Propylen und einer Dienkomponente. Der Kautschuk hat in der Regel eine Glasübergangstemperatur unter 0°C, vorzugsweise unter -40°C (gemessen nach K.M. Illers und H. Breuer, Kolloidzeitschrift 176 (1961), Seite 110).

Die Herstellung des Copolymerisats in Gegenwart eines Kautschuks erfolgt in an sich bekannter Weise durch thermische oder durch übliche Radikalstarter wie Alkyl- oder Acylperoxide, Hydroperoxide, Perester oder Peroxidicarbonate initiierte Polymerisation zwischen 50 und 200°C (s. z.B. Ullmanns Encyclopädie der technischen Chemie, Bd. 19 Verlag Chemie, 1981, S. 265 bis 272).

Die Polymerisation kann kontinuierlich oder diskontinuierlich, wie in DE-B 17 70 392 bzw. DE-B 26 13 352 beschrieben durchgeführt werden und in Masse, Lösung oder Suspension erfolgen. Bei der Polymerisation können Regler wie Mercaptane mit 4 bis 18 C-Atomen anwesend sein.

Beispielsweise wird im diskontinuierlichen Verfahren in Masse oder Lösung bei Temperaturen zwischen 50 und 200°C bis zu einem Umsatz von 10 bis 40 % polymerisiert, anschließend in Wasser im Beisein eines Suspendierhilfsmittels suspendiert, bis zu einem Umsatz von 95 bis 100 % auspolymerisiert und in bekannter Weise das Wertprodukt isoliert.

Die kautschukmodifizierten statistischen Copolymerisate weisen im allgemeinen einen Schmelzindex (200°C/5 kg), gemessen nach DIN 53 735, von 1 bis 15, insbesondere von 2 bis 10 g/10 min auf.

Wenn auch Formmassen, die frei von Polyamid sind, bevorzugt werden, können die erfindungsgemäßen Formmassen über die wesentlichen Komponenten A und B hinaus weitere Bestandteile enthalten.

In Frage kommen übliche Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Kohlenstoff-Fasern und bevorzugt Glasfasern, Füllstoffe wie Gipsfasern, synthetische Calciumsilikate, Kaolin, calciniertes Kaolin, Wollastonit, Talkum, Kreide und/oder Flammschutzmittel wie Triphenylphosphat oder Triphenylphosphinoxid. Diese Zusätze werden in dem Fachmann bekannten Mengen, üblicherweise in Mengen von 0,1 bis 40, vorzugsweise 0,5 bis 20 Gew.-Teilen, bezogen auf 100 Gew.-Teile der Summe aus A und B, eingesetzt.

Ebenfalls in Frage kommen übliche polymere zusätze wie nicht modifizierter Polyphenylenether oder von B verschiedene vinylaromatische Polymerisate, wie sie bereits bei der Komponente $a_1$ beschrieben wurden. Für nähere Einzelheiten sei daher auf die Ausführungen zu Komponente $a_1$ verwiesen.

Die erwähnten, von B verschiedenen vinylaromatischen Polymerisate können auch schlagzäh modifiziert sein.

Dabei werden die vinylaromatischen Polymeren in bekannter Weise in Gegenwart eines Schlagzähmodifiers hergestellt. Als Kautschuke seien beispielsweise Polybutadien-, Styrol-Butadien-, Styrol-b-Butadien-, Acrylnitril-Butadien-, Ethylen-Propylen-, Polyacrylat- und Polyisopren-Kautschuke und als Pfropfkomponente Styrol genannt. Diese Kautschuke können den erfindungsgemäßen Formmassen auch ungepfropft zugesetzt werden.

Als übliche polymere Zusätze seien weiter erwähnt styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert (taper)-, ABAB-,

ABAB-verschmierte Stern-Block-Copolymere und ähnliche, analoge Isopren-Blockpolymerisate und (teil)hydrierte Blockcopolymere.

Diese polymeren Zusätze können in dem Fachmann bekannten Mengen zugesetzt werden. Üblicherweise werden nicht mehr als 80 Gew.-Teile, bezogen auf 100 Gew.-Teile der Summe aus A und B, zugesetzt.

Die Herstellung der erfindungsgemäßen thermoplastischen Formmassen erfolgt zweckmäßigerweise durch Mischen der Komponenten in der Schmelze, also bei Temperaturen im Bereich von 200 bis 320°C, vorzugsweise 250 bis 300°C in üblichen Mischvorrichtungen, wie z.B. Knetern, Banburymischern und Einschneckenextrudern, vorzugsweise in einem Zweischneckenextruder. Um eine möglichst homogene Formmasse zu erhalten, ist eine intensive Durchmischung notwendig, was in bekannter Weise erreicht werden kann. Die mittleren Verweilzeiten beim Mischen liegen im allgemeinen im Bereich von 0,5 bis 30 min, vorzugsweise von 1 bis 5 min.

Die erfindungsgemäßen Formmassen zeichnen sich durch ihre ausgewogenen Eigenschaften wie überraschend gute Schlagzähigkeit und Wärmeformbeständigkeit aus. Als besonderer Vorteil ist ihre hohe Spannungsrißbeständigkeit zu werden.

Aus den erfindungsgemäßen Formmassen lassen sich durch Spritzgießen oder Extrusion Formkörper mit vorteilhaften Eigenschaften herstellen.

Beispiele und Vergleichsversuche

Zur Ausführung von Beispielen und Vergleichsversuchen wurden folgende Komponenten verwendet:

Komponente A

A(1): 9,25 kg Poly-2,6-dimethyl-1,4-phenylenether mit einer relativen Viskosität von 0,61 (gemessen in 1 gew.%iger Lösung in $CHCl_3$ bei 25°C), 0,5 kg Polystyrol (PS mit einem MFI (200°C/5 kg Last) von 24 g/10 min) und 0,25 kg Maleinsäure wurden in einem Zweischneckenextruder (ZSK 53; Werner & Pfleiderer) dosiert, in einem ersten Teil unter Verwendung von Knetelementen bei 280°C aufgeschmolzen, in einem zweiten Teil unter Kneten und Verwendung von Knetelementen bei 280°C umgesetzt und anschließend in einer Entgasungszone bei 280°C durch Anlegen von Vakuum entgast. Die mittlere Verweilzeit im Extruder betrug 3 min. Die austretende Schmelze wurde durch ein Wasserbad geleitet, granuliert und getrocknet. Das Granulat hatte einen Maleinsäuregehalt von 0,9 Gew.%.

A(2): 9,8 kg des in A(1) verwendeten Polyphenylenethers und 0,5 kg des in A(1) verwendeten Polystyrols wurden mit 0,2 kg Fumarsäure wie bei A(1) umgesetzt. Das Granulat hatte einen Fumarsäuregehalt von 0,6 Gew.%.

A(V): Poly-2,6-dimethyl-1,4-phenylenether mit einer relativen Viskosität von 0,5 dl/g.

B(1): In einem mit einem Ankerrührer ausgestatteten Kessel mit einem Fassungsvermögen von 5 Litern wurden 1736 g Styrol, 152 g Polybutadien (Buna® HX 529 C der Fa. Bayer AG), 9,5 g Acrylsäure, 1,9 g eines sterisch gehinderten Phenols als Stabilisator (®Irganox 1076 von Ciba Geigy) und 0,95 g t-Dodecylmercaptan gegeben. Nachdem sich das Polybutadien vollständig gelöst hatte, wurde isotherm bei 123°C und 75 Rührerumdrehungen/Minute bis zu einem Umsatz von 35 %, bezogen auf die Monomeren, polymerisiert. Danach wurde in wäßriger Suspension weiterpolymerisiert. Hierzu wurden 1,9g Dicumylperoxid sowie 1800 ml $H_2O$, 18 g eines Suspendierhilfsmittels auf Basis Ethylenoxid (Luviskol® K90 der BASF Aktiengesellschaft) und 1,8 g Natriumpyrophosphat zugegeben. In Suspension wurde bei 300 Rührerumdrehungen pro Minute 6 h isotherm bei 130°C und 6 h isotherm bei 140°C bis zu einem Umsatz von mehr als 99 %, bezogen auf die Monomeren, polymerisiert.

Der (Acryl)säuregehalt am Endprodukt wurde durch Titration eine Lösung desselben in Toluol/Methanol (9:1) mit einer Maßlösung von NaOH in Methanol gegen Phenolphthalein bestimmt. Es wurde ein Wert von 0,48 Gew.%, bezogen auf das Endprodukt, gefunden.

B(2): Es wurde wie bei B(1) gearbeitet, jedoch mit 20 g Methacrylsäure anstelle von Acrylsäure. Der Säureghehalt des Endproduktes betrug 0,96 Gew.%.

B(3): Es wurde wie bei B(1) gearbeitet, jedoch mit 12,5 g Fumarsäure anstelle von Acrylsäure. Der Säuregehalt des Endproduktes betrug 0,45 Gew.%.

B(V): Schlagfestes Polystyrol mit einem Butadiengehalt von 8 Gew.% (Buna CB HX 529 C Fa. Bayer AG).

Zu Vergleichszwecken wurden die folgenden Komponenten hergestellt:

V(1): 3,2 kg A(V) und 6,8 kg B(V) wurden gemischt und die Mischung mit 0,2 kg Fumarsäure wie bei A(1) beschrieben umgesetzt.

V(2): 2,7 kg A(V) wurden mit 7,3 kg B(V) gemischt und die Mischung wie bei A(1) beschrieben mit 0,25 kg Maleinsäure umgesetzt.

Die in der Tabelle angegebenen Komponenten wurden mit jeweils 0.08 kg Tris(nonylphenyl)phosphit und 0,15 kg Polyethylen auf einem Zweiwellenextruder im Verlaufe von 3 Minuten bei 280°C geschmolzen und homogenisiert und gemischt.

Die angegebenen Messungen wurden wie folgt durchgeführt:

– Die Kerbschlagzähigkeit wurde nach DIN 53 453 an bei 280°C spritzgegossenen Normkleinstäben bei 23°C gemessen.
– Die Wärmeformbeständigkeit wurde nach Vicat (DIN 53 460/B) bestimmt.
– Die Spannungsrißbeständigkeit wurde nach DIN 53 449 ermittelt.

Verwendet wurden bei 280°C hergestellte Probekörper, die für die Dauer von 1 Stunde in Isopropanol gelagert wurden.

Tabelle

| Beispiel | Vergleichs-versuch | Zusammensetzung der Formmassen [kg] A,V Art | A,V Menge | B Art | B Menge | Kerbschlag-zähigkeit [kJ/m²] | Wärmeform-beständigkeit [°C] | Spannungsriß-beständigkeit Rißgrenze $U_R$ [µm] Biege-festigkeit | Reiß-dehnung |
|---|---|---|---|---|---|---|---|---|---|
| 1 | | A(1) | 4,3 | B(2) | 5,7 | 13 | 130 | > 500 | > 500 |
| | 1* | A(V) | 4,0 | B(2) | 6,0 | 4 | 122 | 80 | 50 |
| 2 | | A(1) | 5,0 | B(3) | 5,0 | 14 | 137 | > 500 | > 500 |
| | 2* | A(1) | 5,0 | B(V) | 5,0 | 3 | 125 | 170 | 120 |
| 3 | | A(2) | 3,2 | B(2) | 6,8 | 12 | 125 | > 500 | > 500 |
| 4 | | A(1) | 2,7 | B(1) | 7,3 | 10 | 119 | > 500 | > 500 |
| 5 | | A(1) | 6,5 | B(3) | 3,5 | 15 | 155 | > 500 | > 500 |
| | 3* | V(1) | 10,0 | | | 9 | 123 | 280 | 230 |
| | 4* | V(2) | 10,0 | | | 8 | 117 | 290 | 200 |

**Patentansprüche**

1. Thermoplastische Formmassen, enthaltend als wesentliche Komponenten

A) 10 bis 90 Gew.%, bezogen auf die Summe aus A und B, eines modifizierten Polyphenylenethers hergestellt dürch Umsetzüng in der Schmelze von

$a_1$) 70 bis 99,95 Gew.%, bezogen auf A, eines Polymeranteils, der mindestens 30 Gew.%, bezogen auf $a_1$ Polyphenylenether und höchstens 70 Gew.%, bezogen auf $a_1$, eines vinylaromatischen Polymeren enthält,

$a_2$) 0,05 bis 10 Gew.%, bezogen auf A,

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung oder

$a_{23}$) einer $\alpha,\beta$-ungesättigten Dicarbonsäure, deren Monoester, Diester, Amid, Diamid, Imid oder Anhydrid und

$a_3$) 0 bis 20 Gew.%, bezogen auf A, eines weiteren aliphatischen Comonomeren, das unter den Herstellbedingungen mit $a_1$ reagieren kann,

und

B) 10 bis 90 Gew.%, bezogen auf die Summe aus A und B, eines kautschukmodifizierten statistischen Copolymerisates aus

$b_1$) 85 bis 99,9 Gew.%, bezogen auf B, eines vinylaromatischen Monomeren und

$b_2$) 0,1 bis 15 Gew.%, bezogen auf B, einer $\alpha,\beta$-ungesättigten Carbonsäure.

2. Thermoplastische Formmassen nach Anspruch 1 enthaltend als wesentliche Komponenten 30 bis 70 Gew.% A und 30 bis 70 Gew.% B, wobei die Gew.% bezogen sind auf die Summe aus A und B.

3. Thermoplastische Formmassen nach den Ansprüchen 1 bis 2, dadurch gekennzeichnet, daß die Komponente $a_{21}$ eine Verbindung der allgemeinen Formel I oder II ist

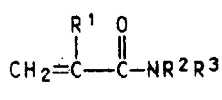

I

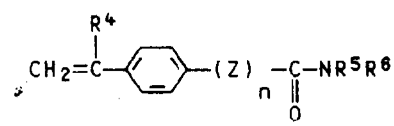

II ,

wobei $R^1$, $R^2$, $R^3$, $R^4$, $R^5$ und $R^6$ Wasserstoff, Alkyl-, Cycloalkyl- oder Arylgruppen und Z Alkylengruppen mit bis zu 12 C-Atomen und $R^1$ und $R^4$ zusätzlich Alkoxygruppen mit bis zu 12 C-Atomen darstellen und n den Wert 0 oder 1 hat.

4. Thermoplastische Formmassen nach den Ansprüchen 1 bis 3, dadurch gekennzeichnet, daß die Komponente $a_{22}$ eine Verbindung der allgemeinen Formel III ist

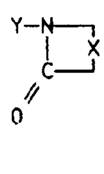

III

wobei X eine lineare oder verzweigte Alkylengruppe mit 2 bis 15 C-Atomen darstellt und Y die allgemeine Formel

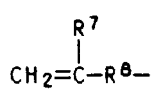

hat, wobei $R^7$ Wasserstoff, eine Alkyl- oder Alkoxygruppe mit 1 bis 4 C-Atomen und $R^8$ einen der nachstehenden zweiwertigen Reste

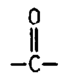 ,

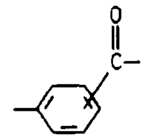 oder

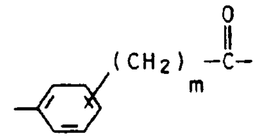 ,

wobei m eine ganze Zahl von 1 bis 4 ist, darstellen.

5. Thermoplastische Formmassen nach den Ansprüchen 1 bis 4, dadurch gekennzeichnet, daß die Komponente $a_{23}$ eine Verbindung der allgemeinen Formel IV ist

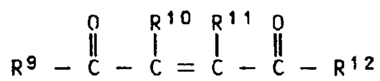 IV

wobei

$R^9$ und $R^{12}$ Hydroxylgruppen, Aroxy-, Alkoxy-, Aralkoxy- oder Cycloalkoxygruppen mit bis zu 12 C-Atomen, -$NR^{13}R^{14}$ oder gemeinsam -$NR^{13}$- oder -O-,

$R^{10}$ und $R^{11}$ Wasserstoff oder, wenn $R^{11}$ oder $R^{10}$ Wasserstoff ist, eine Alkyl-, Alkoxy- oder Cycloalkylgruppe mit bis zu 12 C-Atomen, eine Arylgruppe oder gemeinsam eine Alkylengruppe mit 4 C-Atomen,

$R^{13}$ und $R^{14}$ Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können, darstellen.

6. Thermoplastische Formmassen nach den Ansprüchen 1 bis 5, dadurch gekennzeichnet, daß $a_2$ mindestens ein Element aus der Gruppe Fumarsäure und Maleinsäure ist.

7. Thermoplastische Formmassen nach den Ansprüchen 1 bis 5, dadurch gekennzeichnet, daß $b_2$ mindestens ein Element aus der Gruppe Acrylsäure und Methacrylsäure ist.

8. Verfahren zur Herstellung von thermoplastischen Formmassen gemäß den Ansprüchen 1 bis 7, dadurch gekennzeichnet, daß man die Komponente A durch Umsetzen von $a_1$ bis $a_3$ bei 250 bis 350°C im Verlauf von 0,5 bis 30 Minuten herstellt, die Komponente B durch Polymerisation von 75 bis 97 Gew.% der Monomermischung aus $b_1$ und $b_2$ in Gegenwart von 3 bis 25 Gew.% des Kautschuks herstellt, wobei die Gewichtsprozente jeweils bezogen sind auf die Summe aus Monomermischung und Kautschuk, und anschließend die Komponenten A und B bei 200 bis 320°C im Verlauf von 0,5 bis 30 Minuten mischt.

## Claims

1. A thermoplastic molding material containing, as essential components,

A) from 10 to 90% by weight, based on the sum of A and B, of a modified polyphenylene ether prepared by reacting in the melt

$a_1$) from 70 to 99.95% by weight, based on A, of a polymer which contains not less than 30% by weight, based on $a_1$, of a polyphenylene ether and not more than 70% by weight, based on $a_1$, of a vinylaromatic polymer,

$a_2$) from 0.05 to 10% by weight, based on A, of

$a_{21}$) an amido-containing monomer having a polymerizable double bond,

$a_{22}$) a lactam-containing monomer having a polymerizable double bond or

$a_{23}$) an $\alpha,\beta$-unsaturated dicarboxylic acid or a monoester, diester, amide, diamide, imide or anhydride thereof and

$a_3$) from 0 to 20% by weight, based on A, of a further aliphatic comonomer which is capable of reacting with $a_1$ under the preparation conditions

and

B) from 10 to 90% by weight, based on the sum of A and B, of a rubber-modified random copolymer of

$b_1$) from 85 to 99.9% by weight, based on B, of a vinylaromatic monomer and

$b_2$) from 0.1 to 15% by weight, based on B, of an $\alpha,\beta$-unsaturated carboxylic acid.

2. A thermoplastic molding material as claimed in claim 1, containing, as essential components, from 30 to 70% by weight of A and from 30 to 70% by weight of B, the percentages by weight being based on the sum of A and B.

3. A thermoplastic molding material as claimed in claim 1 or 2, wherein component $a_{21}$ is a compound of the general formula I or II

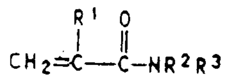

I

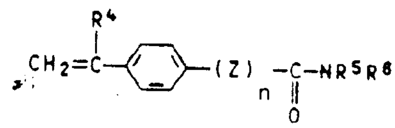

II ,

where $R^1$, $R^2$, $R^3$, $R^4$, $R^5$ and $R^6$ are each hydrogen, alkyl, cycloalkyl or aryl, Z is alkylene of not more than 12 carbon atoms, $R^1$ and $R^4$ may additionally be alkoxy of not more than 12 carbon atoms and n is 0 or 1.

4. A thermoplastic molding material as claimed in claim 1 or 2 or 3, wherein component $a_{22}$ is a compound of the formula III

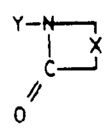

III

where X is linear or branched alkylene of 2 to 15 carbon atoms and Y is of the general formula

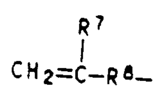

where $R^7$ is hydrogen or an alkyl or alkoxy group of 1 to 4 carbon atoms and $R^8$ is one of the following divalent radicals

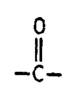

,

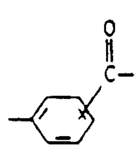

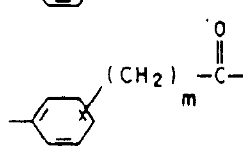

or

where m is an integer from 1 to 4.

5. A thermoplastic molding material as claimed in claim 1 or 2 or 3 or 4, wherein component $a_{23}$ is a compound of the general formula IV

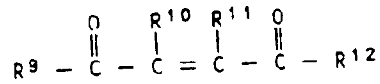

IV

where
$R^9$ and $R^{12}$ are each hydroxyl, an aryloxy, alkoxy, aralkoxy or cycloalkoxy group of not more than 12 carbon atoms or are each $-NR^{13}R^{14}$ or together form $-NR^{13}-$ or -O-,
$R^{10}$ and $R^{11}$ are each hydrogen or, when either $R^{10}$ or $R^{11}$ is hydrogen, the other is an alkyl, alkoxy or cycloalkyl group of not more than 12 carbon atoms or aryl or together form alkylene of 4 carbon atoms and
$R^{13}$ and $R^{14}$ are each hydrogen or an alkyl, cycloalkyl, aralkyl or aryl group of not more than 12 carbon atoms which in turn may be substituted by $C_1$-$C_4$-alkyl or $C_1$-$C_4$-alkoxy.

6. A thermoplastic molding material as claimed in claim 1 or 2 or 3 or 4 or 5, wherein $a_2$ is one or more elements from the group consisting of fumaric acid and maleic acid.

7. A thermoplastic molding material as claimed in claim 1 or 2 or 3 or 4 or 5, wherein $b_2$ is one or more elements from the group consisting of acrylic acid and methacrylic acid.

8. A process for the preparation of a thermoplastic molding material as claimed in claim 1 or 2 or 3 or 4 or 5 or 6 or 7, wherein component A is prepared by reacting $a_1$ to $a_3$ at from 250 to 350°C in the course of from 0.5 to 30 minutes, component B is prepared by polymerizing from 75 to 97% by weight of the monomer mixture of $b_1$ and $b_2$ in the presence of from 3 to 25% by weight of rubber, the percentages by weight in each case being based on the sum of the monomer mixture and rubber, and components A and B are then mixed at from 200 to 320°C in the course of from 0.5 to 30 minutes.

## Revendications

1. Masses à mouler thermoplastiques, contenant, en tant que composants essentiels:

A) 10 à 90% en poids, par rapport à la somme de A et B, d'un polyoxyphénylène modifié, prépare par réaction dans la masse fondue de

$a_1$) 70 à 99,95% en poids, par rapport à A, d'un constituant polymère qui contient au minimum 30% en poids, par rapport à $a_1$, de polyoxyphénylène et au maximum 70% en poids, par rapport à $a_1$, d'un polymère vinylaromatique,

$a_2$) 0,05 à 10% en poids, par rapport à A,

$a_{21}$) d'un monomère contenant des groupements amide et ayant une double liaison polymérisable,

$a_{22}$) d'un monomère contenant des groupements lactame et ayant une double liaison polymérisable, ou

$a_{23}$) d'un acide dicarboxylique $\alpha,\beta$-insaturé, d'un monoester, diester, amide, diamide, imide ou anhydride de celui-ci, et

$a_3$) 0 à 20% en poids, par rapport à A, d'un autre comonomère aliphatique qui peut réagir avec $a_1$ dans les conditions de la préparation, et

B) 10 à 90% en poids, par rapport à la somme de A et B, d'un copolymère statistique modifié par un caoutchouc, composé de:

$b_1$) 85 à 99,9% en poids, par rapport à B, d'un monomère vinylaromatique et

$b_2$) 0,1 à 15% en poids, par rapport à B, d'un acide carboxylique $\alpha,\beta$-insature.

2. Masses à mouler thermoplastiques selon la revendication 1, contenant, en tant que composants essentiels, de 30 à 70% en poids de A et de 30 à 70% en poids de B, les pourcentages en poids se rapportant à la somme de A et B.

3. Masses à mouler thermoplastiques selon la revendication 1 ou 2, caractérisées en ce que le composant $a_{21}$ est un composé de formule générale I ou II

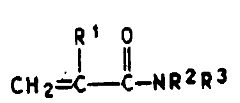

I

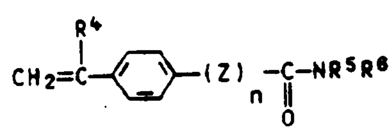

II ,

$R^1$, $R^2$, $R^3$, $R^4$, $R^5$ et $R^6$ représentant des atomes d'hydrogène ou des groupements alkyle, cycloalkyle ou aryle,

Z représentant des groupements alkylène renfermant jusqu'à 12 atomes de carbone, $R^1$ et $R^4$ pouvant en plus représenter des groupements alcoxy renfermant jusqu'à 12 atomes de carbone et n ayant la valeur 0 ou 1.

4. Masses à mouler thermoplastiques selon l'une quelconque des revendications 1 à 3, caractérisées en ce que le composant $a_{22}$ est un composé de formule générale III

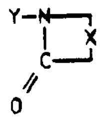 III

X représentant un groupement alkylène linéaire ou ramifié à 2-15 atomes de carbone, et Y ayant la formule générale

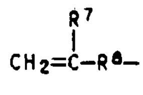

dans laquelle $R^7$ représente un atome d'hydrogène ou un groupement alkyle ou alcoxy à 1-4 atomes de carbone, et $R^8$ représente l'un des restes bivalents suivants

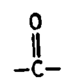 ,

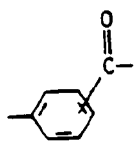 ou

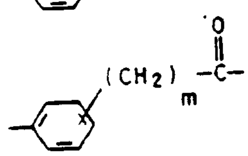

m étant un nombre entier de 1 à 4.

5. Masses à mouler thermoplastiques selon l'une quelconque des revendications 1 à 4, caractérisées en ce que le composant $a_{23}$ est un composé de formule générale IV

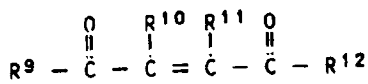 IV

dans laquelle

$R^9$ et $R^{12}$ représentant des groupements hydroxy, des groupements aroxy, alcoxy, aralcoxy ou cycloalcoxy renfermant jusqu'à 12 atomes de carbone, $-NR^{13}R^{14}$ ou, en commun, $-NR^{13}-$ ou -O-

$R^{10}$ et $R^{11}$ représentant des atomes d'hydrogène ou, lorsque $R^{11}$ ou $R^{10}$ est un atome d'hydrogène, ils représentent un groupement alkyle, alcoxy ou cycloalkyle renfermant jusqu'à 12 atomes de carbone, un groupement aryle ou, en commun, un groupement alkylène à 4 atomes de carbone,

$R^{13}$ et $R^{14}$ représentant des atomes d'hydrogène, des groupements alkyle, cycloalkyle, aralkyle ou aryle qui renfermant jusqu'à 12 atomes de carbone et qui peuvent être substitués de leur côté par des groupements alkyle ou alcoxy en C, à $C_4$.

6. Masses à mouler thermoplastiques selon l'une quelconque des revendications 1 à 5, caractérisées en ce que $A_2$ est au moins un élément du groupe de l'acide fumarique et de l'acide maléique.

7. Masses à mouler thermosplastiques selon l'une quelconque des revendications 1 à 5, caractérisées en ce que $b_2$ est au moins un élément du groupe de l'acide acrylique et de l'acide méthacrylique.

8. Procédé de préparation de masse à mouler thermoplastiques selon l'une quelconque des revendications

1 à 7, caractérisé en ce qu'on prépare le composant A par réaction de $a_1$ à $a_3$ à une température de 250 à 350°C en l'espace de 0,5 30 mm, on prépare le composant B par polymérisation de 75 à 97% en poids du mélange de monomères de $b_1$ et $b_2$ en présence de 3 à 25% en poids du caoutchouc, les pourcentages en poids se rapportant chaque fois à la somme du mélange de monomères et du caoutchouc, puis on mélange les composant A et B à une température de 200 à 320°C en l'espace de 0,5 à 30 mn.